# EUROPEAN PATENT APPLICATION

(11) **EP 2 750 437 A1**
(43) Date of publication of application: **02.07.2014**
(21) Application number: 11867002.5
(22) Date of filing: 30.09.2011
(51) Int. Cl.: H04W 28/02

(54) **METHOD AND DEVICE FOR PERFORMING POLICY CONTROL ON DATA PACKET**

(71) Applicant: Huawei Technologies Co., Ltd., Shenzhen, Guangdong 518129 (CN)
(72) Inventor: LI, Yan, Shenzhen Guangdong 518129 (CN); SHI, Xiaoyan, Shenzhen Guangdong 518129 (CN)
(74) Representative: Pfenning, Meinig & Partner GbR
(86) International application number: PCT/CN2011/080434
(87) International publication number: WO 2012/162994

(57) **Abstract**

Embodiments of the present invention provide a method and an apparatus for performing policy control on a data packet. The method mainly includes: allocating, by a local gateway, a port range to a UE, where the port range is unique to the UE; sending, by the local gateway, the port range of the UE and user information to a policy server, so that the policy server makes a policy rule for the UE, where the policy rule contains the port range; and performing, by the local gateway, network address translation on a packet sent by the UE , so that a source port of the converted packet is in the port range, and sending the converted packet to a network gateway in a fixed network, so that the network gateway performs policy control on the packet according to the policy rule received from the policy server. The embodiments of the present invention may enable the network gateway to identify the UE according to the port range and perform policy control on the UE according to the policy rule containing the port range, so as to implement differentiated processing on different UEs and improve user experience.

## Description

### TECHNICAL FIELD

The present invention relates to the field of communications technologies, and in particular, to a method and an apparatus for performing policy control on a data packet.

### BACKGROUND

In a network architecture provided by a femto cell (FEMTO Cell) in the 3rd Generation Partnership Project (The 3rd Generation Partnership Project, 3GPP for short), after a user equipment (User Equipment, UE for short) establishes a wireless connection with a home base station, the home base station sends user data to a security gateway (Se-Gateway, SeGW for short) of a mobile network through a residential gateway (Residential Gateway, RG for short), an access node (Access Node, AN for short) in a fixed network, and a broadband network gateway (Broadband Network Gateway, BNG for short), the user data finally reaches a packet data network gateway (Packet Data Network Gateway, PGW for short) through a serving gateway (Serving Gateway, SGW for short), and the PGW sends a data packet to a packet data network (Packet Data Network, PDN for short), for example, Internet; likewise, a packet sent by the PDN is returned to the UE through the same path.

In the foregoing process of data packet transmission, data traffic of the UE needs to further pass through devices in multiple mobile networks after passing through the BNG, which leads to the following several problems: extra transmission costs are added, processing costs of devices are added, time delay in data transmission is increased, and QoS experience of a user is affected. To solve the foregoing problems, it may be considered that a data packet of the user is sent directly from the BNG to the PDN.

In the prior art, a method for implementing data stream bypass on a BNG mainly includes the following: the BNG generally allocates a public network IP address to an RG, where the RG itself has a network address translation (NAT for short) function; when an IP address needs to be allocated to multiple UEs of an RG, the RG allocates a private network address (which supports routing only in a local network) to each UE; when a device of the RG accesses an external network by using the RG, the RG performs the NAT function to translate a source address of an IP packet from a private network address to a public network address, and converts a source port number of the IP packet at the same time; in this manner, multiple devices of the same RG may share an IP address but have different source port numbers when the devices access an external network; when a downlink packet reaches the RG, the RG determines, according to a destination address and a destination port number, a UE to which the RG sends the packet.

However, the foregoing method has at least the following problems:

Since a BNG identifies an RG according to a public network IP address, all IP packets sent from the RG are considered as traffic of a UE of a same user, the BNG cannot differentiate different UEs that access the RG, and cannot perform differentiated management on the different UEs, which degrades user experience.

### SUMMARY

Embodiments of the present invention provide a method and an apparatus for performing policy control on a data packet, so as to achieve that a network gateway performs differentiated processing on different UEs.

A method for performing policy control on a data packet includes:
allocating, by a local gateway, a port range to a UE, where the port range is unique to the UE;
sending, by the local gateway, the port range of the UE and user information to a policy server, so that the policy server makes a policy rule for the UE, where the policy rule contains the port range; and
performing, by the local gateway, network address translation on a packet sent by the UE , so that a source port of the converted packet is in the port range, and sending the converted packet to a network gateway in a fixed network, so that the network gateway performs policy control on the packet according to the policy rule received from the policy server.

A local gateway includes:
a port range processing module, configured to allocate a port range to a UE, where the port range is unique to the UE; send the port range of the UE and user information to a policy server, so that the policy server makes a policy rule for the UE, where the policy rule contains the port range; and
a network address translation module, configured to perform network address translation on a packet sent by the UE , so that a source port of the converted packet is in the port range, and send the converted packet to a network gateway in a fixed network, so that the network gateway performs policy control on the packet according to the policy rule received from the policy server.

A network gateway includes:
a policy rule storage module, configured to receive a policy rule of a UE sent by a policy server and store the policy rule, where the policy rule contains a port range of the UE; and
a policy rule execution module, configured to acquire a 5-tuple of a packet sent by a local gateway, and match the 5-tuple of the packet with a 5-tuple in the policy rule stored in the policy rule storage module, determine the policy rule as a policy rule of the packet if the matching succeeds, perform policy control on the packet according to the policy rule, and send the packet on which policy control is performed to an external network.

A system for performing policy control on a data packet includes the local gateway and the network gateway.

It can be seen from the technical solutions provided in the embodiments of the present invention that in the embodiments of the present invention, a local gateway allocates a unique port range to a UE, so that a network gateway may identify the UE according to the port range and perform policy control on the UE according to a policy rule containing the port range, so as to implement differentiated processing on different UEs and improve user experience.

### BRIEF DESCRIPTION OF DRAWINGS

FIG. 1 is a processing flow chart of a method for performing policy control on a data packet according to Embodiment 1 of the present invention;
FIG. 2A and FIG. 2B are a processing flow chart of a method for performing policy control on a data packet according to Embodiment 2 of the present invention;
FIG. 3A and FIG. 3B are a processing flow chart of a method for performing policy control on a data packet according to Embodiment 3 of the present invention;
FIG. 4 is a specific structural diagram of a local gateway according to Embodiment 4 of the present invention;
FIG. 5 is a specific structural diagram of a network gateway according to Embodiment 4 of the present invention; and
FIG. 6 is a specific structural diagram of a system for performing policy control on a data packet according to Embodiment 4 of the present invention.

### DESCRIPTION OF EMBODIMENTS

In embodiments of the present invention, a local gateway allocates a port range to a UE, where the port range is unique to the UE; the local gateway sends the port range of the UE and user information to a policy server, so that the policy server makes a policy rule for the UE, where the policy rule contains the port range; and the local gateway performs network address translation on a packet sent by the UE , so that a source port of the converted packet is in the port range, and sends the converted packet to a network gateway in a fixed network, so that the network gateway performs policy control on the packet according to the policy rule received from the policy server. The network gateway acquires a 5-tuple of the packet, matches the 5-tuple of the packet with a 5-tuple in the policy rule received from the policy server, determines the policy rule as a policy rule of the packet if the matching succeeds, performs policy control on the packet according to the policy rule, and sends the packet on which policy control is performed to an external network. The network gateway further acquires a 5-tuple of a packet sent by the external network to the UE, matches the 5-tuple of the packet with the 5-tuple in the policy rule received from the policy server, determines the policy rule as a policy rule of the packet if the matching succeeds, performs policy control on the packet according to the policy rule, and sends the packet on which policy control is performed to the UE.

To facilitate understanding about the embodiments of the present invention, several specific embodiments are used as examples to make further description with reference to the accompanying drawings, and the embodiments are not intended to limit the embodiments of the present invention.

### Embodiment 1

This embodiment is for a scenario in which a local packet data network gateway (local PDN GW, LPGW for short) is integrated with an RG, and meanwhile, the RG/LPGW has an NAT function.

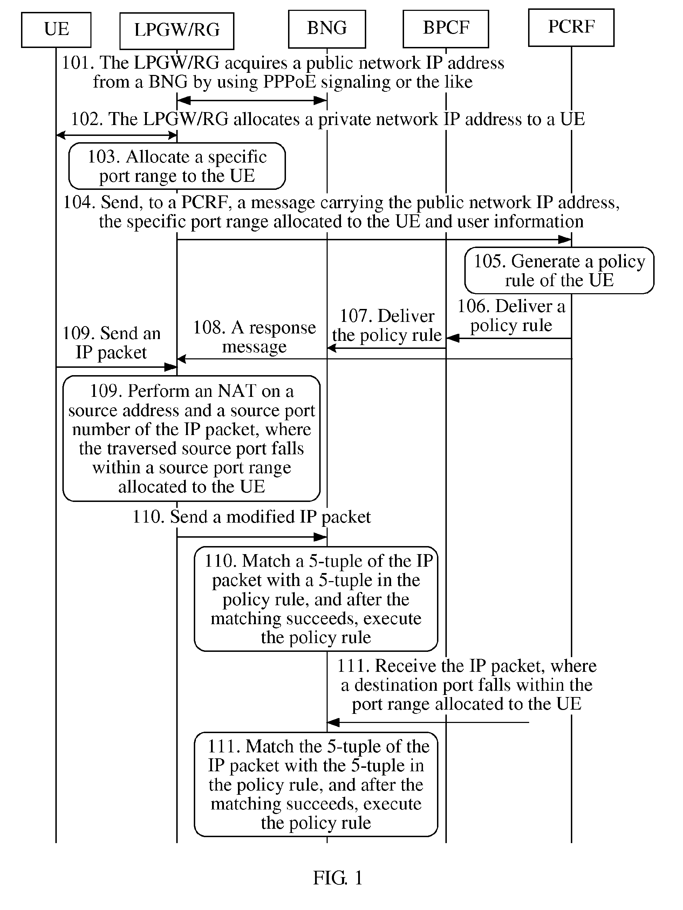

A processing flow chart of a method for performing policy control on a data packet according to this embodiment is shown in FIG. 1, and the method includes the following processing steps:
Step 101: The RG/LPGW acquires a public network IP address from a BNG by using PPP over Ethernet (PPP over Ethernet, PPPoE for short) signaling, Dynamical Host Configuration Protocol (Dynamical Host Configuration Protocol, DHCP for short) signaling, or the like, where the public network IP address may be shared by multiple UEs of the RG/LPGW.
Step 102: The UE requests an IP address from the RG/LPGW by using a PDN connection establishment or attachment process, and the RG/LPGW allocates a private network IP address to the UE and sends the private network IP address to the UE.
Step 103: The RG/LPGW allocates a specific port range to the UE, where the port range can only be uniquely used by the UE, for example, a port range 1000-1200 is allocated to UE1 and a port range 1300-1500 is allocated to UE2. The RG/LPGW associates the private network IP address of each UE with the port range of each UE and stores them.

Optionally, the RG/LPGW sends the port range to the UE, for example, sends the port range to the UE by using a traffic flow template (traffic flow template, TFT for short) parameter. When the UE subsequently sends an IP packet to the RG/LPGW, a source port number of the IP packet can be selected only from the port range.

Step 104: The RG/LPGW establishes an IP connectivity access network (IP Connectivity Access Network, IPCAN for short) session with a policy server in a mobile network, where in this embodiment, the policy server is a policy control and charging rules function (Policy Control and Charging Rules Function, PCRF for short).

The RG/LPGW sends, to the PCRF, an IPCAN session message carrying the foregoing public network IP address, the port range allocated by the RG/LPGW to the UE and user information, where the IPCAN session message may be a credit control request (Credit Control Request, CCR for short) message, and the user information may include, but not limited to, information such as an identifier of a user, an attribute, a level of the user, and a priority level of a user service.

Step 105: The PCRF generates a policy rule of the UE according to the received user information, where the policy rule contains the port range allocated by the RG/LPGW to the UE. Since port ranges of different UEs are different, it can be achieved that different policy rules are separately set based on different UEs. A universal policy rule contains a condition and a corresponding action; and for an IP flow-based policy rule, a condition of the rule is usually an IP 5-tuple (an IP source address, a destination address, a source port, a destination port, and a protocol). The policy rule of the UE may include uplink and downlink policy rules. In the uplink policy rule, a range of a source port is the port range allocated by the RG/LPGW to the UE, and in the downlink policy rule, a range of a destination port is the port range allocated by the RG/LPGW to the UE.

In an actual application, the PCRF may set the same policy rule for all IP flows of the UE, or may separately set different policy rules for different types of IP flows of the UE.

For example, if all IP flows of the UE require higher QoS, the PCRF may generate the following policy rule: in a sending direction, a source address is a public network IP address allocated by the BNG to the RG/LPGW, a source port number is the port range allocated by the RG/LPGW to the UE, a destination address is wildcarded, a destination port is also wildcarded, and a protocol is wildcarded; in a receiving direction, a destination address is the public network IP address allocated by the BNG to the RG/LPGW, a destination port number is the port range allocated by the RG/LPGW to the UE, a source address wildcarded, a source port number is also wildcarded, and a protocol is wildcarded; and a policy action has a high priority level or a large bandwidth.

For example, the PCRF needs to generate an independent policy rule for a flow of the UE that accesses a certain video website, and the PCRF may be triggered by the UE (for example, the UE initiates a resource request) or triggered by a network side (for example, interaction of a third-party video server with the PCRF requires an improvement on QoS for a video stream of the UE). The PCRF generates the following policy rule for a flow of the UE that accesses a certain video website: In a sending direction, a source address is the public network IP address allocated by the BNG to the RG/LPGW, a source port number is the port range allocated by the RG/LPGW to the UE, a destination address is a specific server address, a destination port number is a specific server port number, and a protocol is a protocol used by the flow; in a receiving direction, a destination address is the public network IP address allocated by the BNG to the RG/LPGW, a destination port number is the port range allocated by the RG/LPGW to the UE, a source address is a specific server address, a source port number is a specific server port number, and a protocol is a protocol used by the flow; and a policy action has a high priority level or a large bandwidth.

Step 106: After the PCRF generates the policy rule of the UE, the PCRF sends the policy rule of the UE to a broadband policy control framework (Broadband Policy Control Framework, BPCF for short).

To perform policy control on a packet sent by the UE in a fixed network, a PCRF of a mobile network needs to send the policy rule of the packet to the BPCF in the fixed network, and the BPCF controls the network device in the fixed network, so as to implement the policy control. It should be noted that the BPCF and PCRF may be integrated, and in this situation, the PCRF/BPCF may directly send the policy rule of the UE to the BNG, and step 106 is not required.

Step 107: After the BPCF receives the policy rule of the UE, the BPCF sends the policy rule to the BNG and returns a response message to the PCRF.

The BPCF sends the policy rule of the UE to the BNG, and the BNG stores the received policy rule of the UE. The BNG may store policy rules of multiple UEs in a form of a database table, where the database table includes a port range entry and a specific rule content entry.

Step 108: The PCRF returns the response message to the RG/LPGW. It should be noted that the response message and the response message in step 107 are not in a strict sequential relationship and may be performed at the same time.

Step 109: The UE sends an IP packet, whose source address is the private network IP address allocated by the RG/LPGW to the UE.

When the RG/LPGW does not send the port range to the UE, the UE may select to use an idle port number as a source port number. After the IP packet reaches the RG/LPGW, the RG/LPGW performs an NAT operation, so as to modify a source address and the source port number of the IP packet, where the source address is modified to the public network IP address allocated by the BNG to the RG/LPGW, and the modified source port number is selected from the port range allocated to the UE in step 103, for example, for the UE1, one may be selected only from 1000 to 1200.

When the RG/LPGW sends the port range to the UE, the UE selects a source port number from the port range; and after the IP packet reaches the RG/LPGW, the RG/LPGW performs an NAT operation to modify the source address of the IP packet, but the RG/LPGW does not modify the source port number.

Step 110: The RG/LPGW sends the modified IP packet to the BNG, the BNG acquires a 5-tuple of the IP packet, matches the 5-tuple of the packet with a 5-tuple in the policy rule stored in step 107, determines the policy rule as a policy rule of the IP packet if the matching succeeds, and then performs policy control, such as QoS control and charging control, on the IP packet according to the policy rule.

Step 111: In a downlink direction, the BNG receives an IP packet sent by an external network to the UE, where a destination address of the IP packet is the public network IP address allocated by the BNG to the RG/LPGW, and a destination port number falls within the port range allocated by the RG/LPGW to the UE.

The BNG acquires a 5-tuple of the downlink IP packet, matches the 5-tuple of the packet with the 5-tuple in the policy rule stored in step 107, determines the policy rule as a policy rule of the IP packet if the matching succeeds, and then performs policy control, such as QoS control and charging control, on the IP packet according to the policy rule.

### Embodiment 2

This embodiment is for a scenario in which an LPGW is separated from an RG, where the RG uses a bridge mode for an LPGW access port, that is, a BNG allocates an independent IP address for the LPGW by using the RG and meanwhile, both the RG and the LPGW have an NAT function.

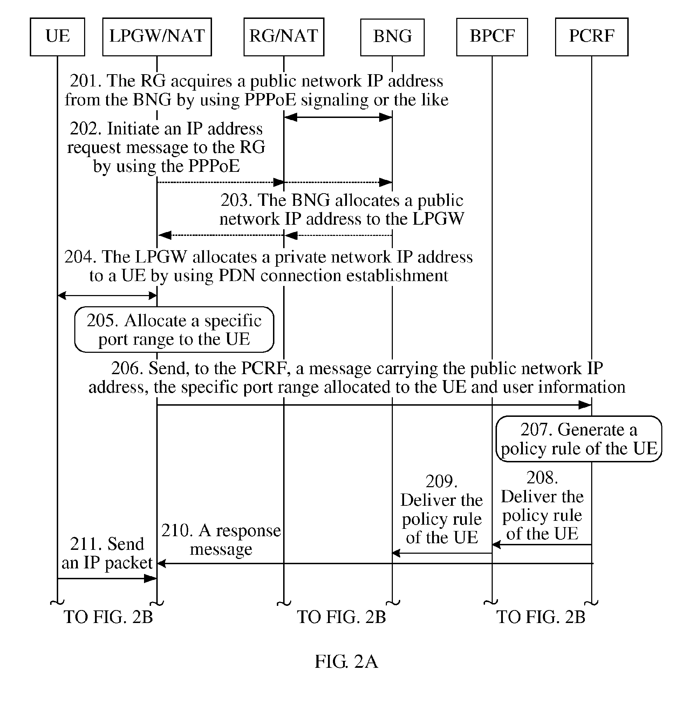

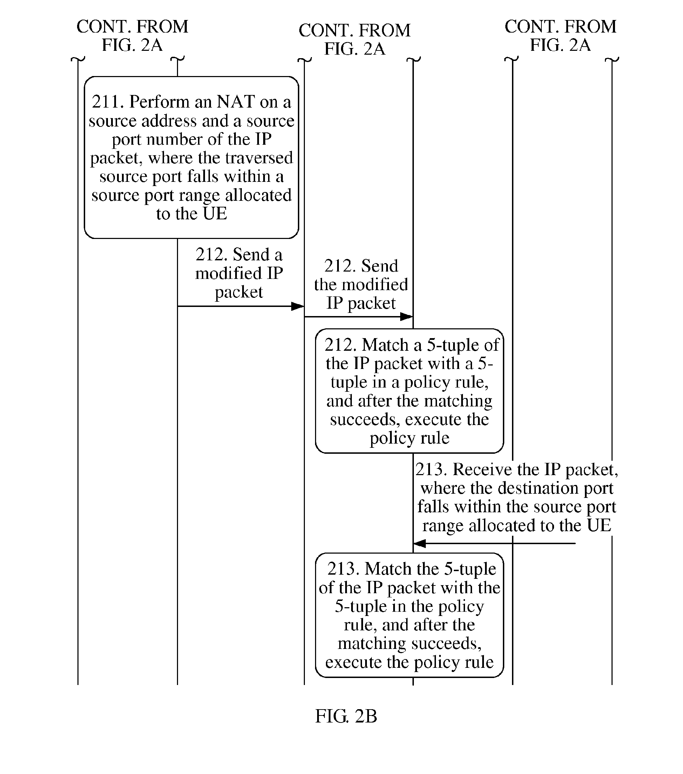

A processing flow chart of a method for performing policy control on a data packet according to this embodiment is shown in FIG. 2A and FIG. 2B; and the method includes the following processing steps:
Step 201: The RG acquires a public network IP address from the BNG by using PPPoE, DHCP or the like, where the public network IP address may be shared by multiple UEs of the RG.
Step 202: After the LPGW is powered on, the LPGW initiates an IP address request message to the RG by using the PPPoE, the DHCP or the like. Since the RG uses the bridge mode for the LPGW access port, the RG forwards the IP address request message to the BNG. The RG may use a routing mode for other access devices, that is, other devices share the public network IP address acquired by the RG from the BNG.
Step 203: The BNG allocates an independent public network IP address to the LPGW according to the received IP address request message, where the public network IP address is different from the public network IP address allocated to the RG in step 201.
Step 204: The UE requests an IP address from the LPGW by using a PDN connection establishment or attachment process, and the LPGW allocates a private network IP address to the UE.
Step 205: The LPGW allocates a specific port range to the UE, where the port range can be used only by the UE, for example, a port range 1000-1200 is allocated to UE1 and a port range 1300-1500 is allocated to UE2.

Optionally, the LPGW sends the port range to the UE, for example, sends the port range to the UE by using a TFT parameter. When the UE subsequently sends an IP packet to the LPGW, a source port number of the IP packet can be selected only from the port range.

Step 206: The LPGW establishes an IPCAN session with a PCRF in a mobile network, and the LPGW sends, to the PCRF, an IPCAN session message carrying the public network IP address, the port range allocated by the LPGW to the UE and user information, where the user information may include, but not limited to, information about an identifier of a user, an attribute, a level of the user, and a priority level of a user service.

Step 207: The PCRF generates a policy rule of the UE according to the received user information, where the policy rule contains the port range allocated by the LPGW to the UE. Since port ranges of different UEs are different, it can be achieved that different policy rules are separately set based on different UEs. A universal policy rule contains a condition and a corresponding action; and for an IP flow-based policy rule, a condition of the rule is usually an IP 5-tuple (an IP source address, a destination address, a source port, a destination port, and a protocol). The policy rule of the UE may include uplink and downlink policy rules. In the uplink policy rule, a range of a source port is the port range allocated by the RG/LPGW to the UE, and in the downlink policy rule, a range of a destination port is the port range allocated by the RG/LPGW to the UE.

If all IP flows of the UE require higher QoS, the PCRF may generate the following policy rule: in a sending direction, a source address is the public network IP address allocated by the BNG to the LPGW, a source port number is the port range allocated by the LPGW to the UE, a destination address is wildcarded, a destination port is also wildcarded, and a protocol is wildcarded; in a receiving direction, a destination address is the public network IP address allocated by the BNG to the LPGW, a destination port number is the port range allocated by the LPGW to the UE, a source address wildcarded, a source port number is also wildcarded, and a protocol is wildcarded; and a policy action has a high priority level or a large bandwidth.

Step 208: After the PCRF generates the policy rule of the UE, the PCRF sends the policy rule of the UE to a BPCF.

It should be noted that the BPCF and PCRF may be integrated, and in this situation, the PCRF/BPCF may directly send the policy rule of the UE to the BNG, and step 208 is not required.

Step 209: After the BPCF receives the policy rule of the UE, the BPCF sends the policy rule to the BNG and returns a response message to the PCRF.

The BPCF sends the policy rule of the UE to the BNG, and the BNG stores the received policy rule of the UE. The BNG may store policy rules of multiple UEs in a form of a database table, where the database table includes a port range entry and a specific rule content entry.

Step 210: The PCRF returns a response message to the LPGW. It should be noted that the response message and the response message in step 209 are not in a strict sequential relationship and may be performed at the same time.

Step 211: The UE sends an IP packet, whose source address is the private network IP address allocated by the LPGW to the UE.

When the LPGW does not send the port range to the UE, the UE may select to use an idle port number as a source port number. After the IP packet reaches the LPGW, the LPGW performs an NAT operation, so as to modify a source address and the source port number of the IP packet, where the source address is modified to the public network IP address allocated by the BNG to the LPGW, and the modified source port number is selected from the port range allocated to the UE in step 205, for example, for the UE1, one may be selected only from 1000 to 1200.

When the LPGW sends the port range to the UE, the UE selects a source port number from the port range; and after the IP packet reaches the LPGW, the LPGW performs an NAT operation to modify the source address of the IP packet, but the LPGW does not modify the source port number.

Step 212: The LPGW sends the modified IP packet to the RG, and then the RG sends the modified IP packet to the BNG. The BNG acquires a 5-tuple of the IP packet, matches the 5-tuple of the packet with a 5-tuple in the policy rule stored in step 209, determines the policy rule as a policy rule of the IP packet if the matching succeeds, and then performs policy control, such as QoS control and charging control, on the IP packet according to the policy rule.

Step 213: In a downlink direction, the BNG receives an IP packet sent by an external network to the UE, where a destination address of the IP packet is the public network IP address allocated by the BNG to the LPGW, and a destination port number falls within the port range allocated by the LPGW to the UE.

The BNG acquires a 5-tuple of the downlink IP packet, matches the 5-tuple of the packet with the 5-tuple in the policy rule stored in step 209, determines the policy rule as a policy rule of the IP packet if the matching succeeds, and then performs policy control, such as QoS control and charging control, on the IP packet according to the policy rule.

### Embodiment 3

This embodiment is for a scenario in which an LPGW is separated from an RG, where the RG uses a routing mode for the LPGW and other devices, where both the LPGW and other devices share a public network IP address acquired by the RG from a BNG, and only the RG has an NAT function.

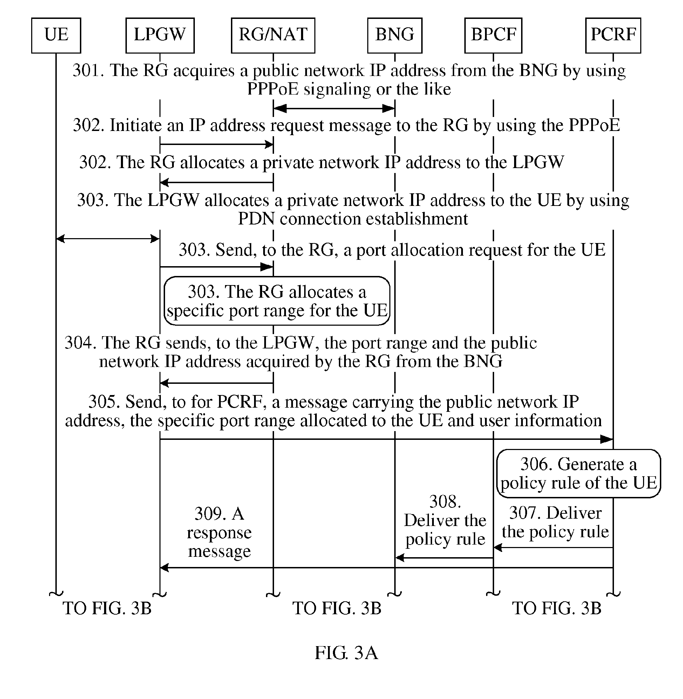

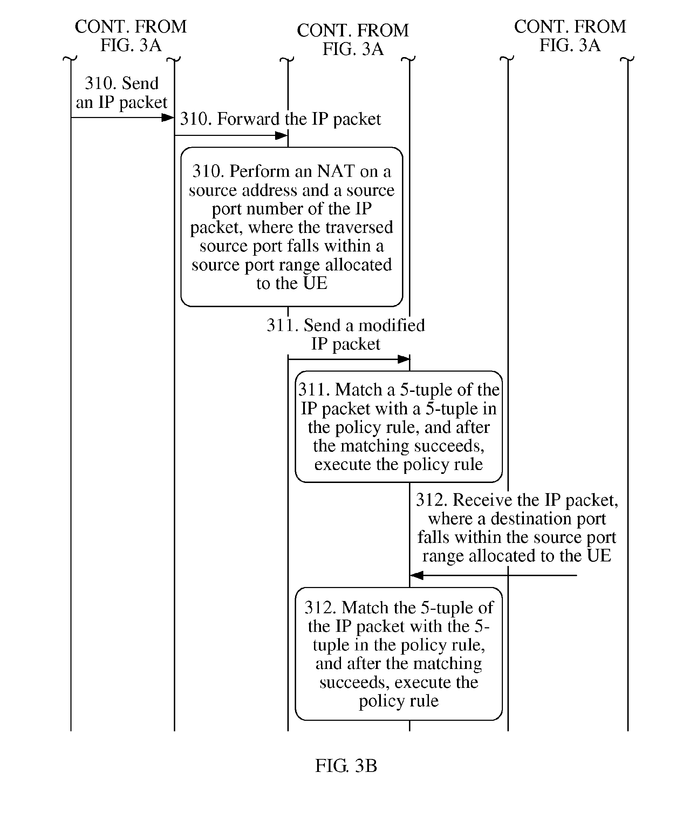

A processing flow chart of a method for performing policy control on a data packet according to this embodiment is shown in FIG. 3A and FIG. 3B; and the method includes the following processing steps:
Step 301: The RG acquires a public network IP address from the BNG by using PPPoE, DHCP or the like, where the public network IP address may be shared by multiple UEs of the RG and may be shared by the LPGW.
Step 302: After the LPGW is powered on, the LPGW initiates an IP address request message to the RG by using the PPPoE, the DHCP or the like. Since the RG uses the routing mode for an LPGW access port, the RG allocates a private network IP address to the LPGW.
Step 303: The UE requests an IP address from the LPGW by using a PDN connection establishment or attachment process, and the LPGW allocates a private network IP address to the UE in a private network IP address range allocated by the RG to the LPGW.

The LPGW sends a port allocation request to the RG for the UE, where the port allocation request carries the private network IP address allocated to the UE, and the port allocation request message may be implemented by using some existing protocols, such as a Universal Plug and Play (Universal Plug and Play, UPNP for short) protocol and a Realm Specific IP (Realm Specific IP, RSIP for short) protocol.

The RG allocates a specific port range to the UE, where the port range can be used only by the UE, for example, a port range 1000-1200 is allocated to UE1 and a port range 1300-1500 is allocated to UE2.

Step 304: The RG sends, to the LPGW, the port range and the public network IP address that is acquired by the RG from the BNG.

Optionally, the LPGW sends the port range to the UE, for example, sends the port range to the UE by using a TFT parameter. When the UE subsequently sends an IP packet to the LPGW, a source port number of the IP packet can be selected only from the port range.

Step 305: The LPGW establishes an IPCAN session with a PCRF in a mobile network, the LPGW sends, to the PCRF, an IPCAN session message carrying the public network IP address, the port range allocated by the RG to the UE and user information, where the user information may include, but not limited to, information about an identifier of a user, an attribute, a level of the user, and a priority level of a user service.

Step 306: The PCRF generates a policy rule of the UE according to the received user information, where the policy rule contains the port range allocated by the RG to the UE. Since port ranges of different UEs are different, it can be achieved that different policy rules are separately set based on different UEs. A universal policy rule contains a condition and a corresponding action; and for an IP flow-based policy rule, a condition of the rule is usually an IP 5-tuple (an IP source address, a destination address, a source port, a destination port, and a protocol). The policy rule of the UE may include uplink and downlink policy rules. In the uplink policy rule, a range of a source port is the port range allocated by the RG to the UE, and in the downlink policy rule, a range of a destination port is the port range allocated by the RG to the UE.

Step 307: After the PCRF generates the policy rule of the UE, the PCRF sends the policy rule of the UE to a BPCF.

It should be noted that the BPCF and PCRF may be integrated, and in this situation, the PCRF/BPCF may directly send the policy rule of the UE to the BNG, and step 307 is not required.

Step 308: After BPCF receives the policy rule, the BPCF sends the policy rule to the BNG and returns a response message to the PCRF.

The BPCF sends the policy rule to the BNG, and the BNG stores the received policy rule. The BNG may store policy rules of multiple UEs in a form of a database table, where the database table includes a port range entry and a specific rule content entry.

Step 309: The PCRF returns a response message to the LPGW. It should be noted that the response message and the response message in step 306 are not in a strict sequential relationship and may be performed at the same time.

Step 310: The UE sends an IP packet to the LPGW, where a source address of the IP packet is the private network IP address allocated by the LPGW to the UE.

When the LPGW does not send the port range to the UE, the UE may select to use an idle port number as a source port number; and when the LPGW sends the port range to the UE, the UE selects a source port number from the port range.

When the IP packet reaches the LPGW, the LPGW does not perform any NAT operation and sends the IP packet to the RG. The RG performs the NAT operation, so as to modify a source address and the source port number of the IP packet and modify the source address to the public network IP address allocated by the BNG to the LPGW, where the modified source port number is selected from the specific port range allocated to the UE, for example, for the UE1, one can be selected only from 1000 to 1200. When the LPGW sends the port range to the UE, the UE selects a source port number from the port range; and after the IP packet reaches the RG, the RG modifies the source address of the IP packet and does not modify the source port number.

Step 311: The RG sends the modified IP packet to the BNG, the BNG acquires a 5-tuple of the IP packet, matches the 5-tuple of the packet with a 5-tuple in the policy rule stored in step 308, determines the policy rule as a policy rule of the IP packet if the matching succeeds, and then performs policy control, such as QoS control and charging control, on the IP packet according to the policy rule.

Step 312: In a downlink direction, the BNG receives an IP packet sent by an external network to the UE, where a destination address of the IP packet is the public network IP address allocated by the BNG to the RG, and a destination port number falls within the port range allocated by the RG for the UE.

The BNG acquires a 5-tuple of the foregoing downlink IP packet, matches the 5-tuple of the packet with the 5-tuple in the policy rule stored in step 308, determines the policy rule as a policy rule of the IP packet if the matching succeeds, and then performs policy control, such as QoS control and charging control, on the IP packet according to the policy rule.

### Embodiment 4

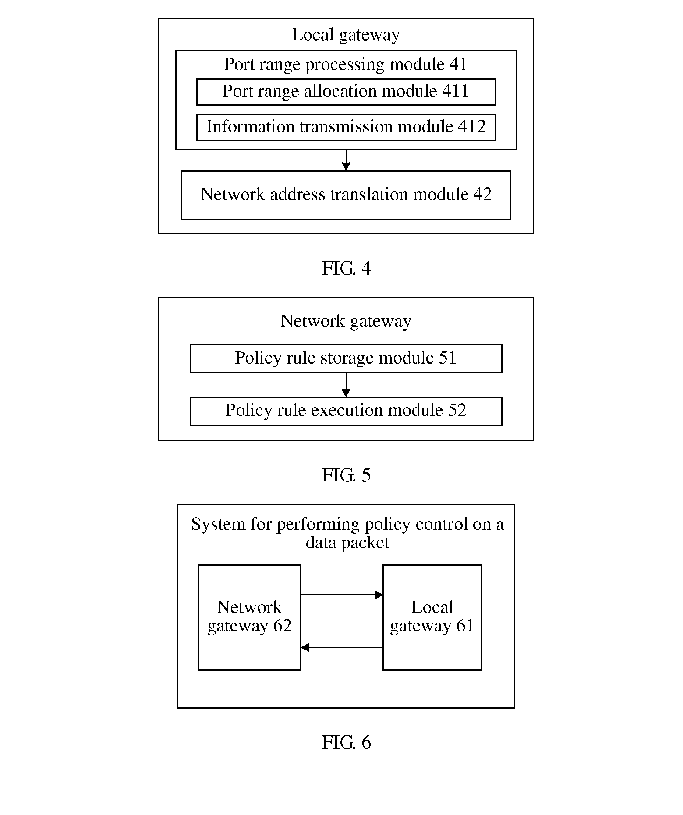

This embodiment provides a local gateway, and a specific structure of the local gateway is shown in FIG. 4. The local gateway includes the following modules:
a port range processing module 41, configured to allocate a port range to a UE, where the port range is unique to the UE; send the port range of the UE and user information to a policy server, so that the policy server makes a policy rule for the UE, where the policy rule contains the port range; and
a network address translation module 42, configured to perform network address translation on a packet sent by the UE , so that a source port of the converted packet is in the port range, and send the converted packet to a network gateway in a fixed network, so that the network gateway performs policy control on the packet according to the policy rule received from the policy server.

Specifically, the port range processing module 41 may include:
a port range allocation module 411, configured to allocate a private network address and a port range to the UE, based on an address request message sent by the UE by using a packet data network connection establishment or attachment process; and
associate the private network address of the UE with the port range of the UE and store them, and send the private network address to the UE; or send the private network address of the UE and the port range of the UE to the UE, so that the UE selects a source port of a sent packet from the port range; and
an information transmission module 412, configured to send a message carrying the port range of the UE and user information to a policy server in a mobile network, so that the policy server generates a policy rule of the UE according to the user information, where the user information includes at least one of the following items: an identifier of a user, an attribute, a level of the user, and a priority level of a user service, and the policy rule contains the port range.

Specifically, the network address translation module 42 may be configured to: when the port range processing module does not send the port range to the UE, modify a source address of a packet sent by the UE to a public network address acquired by the local gateway from the network gateway, modify a source port number of the packet to a certain port number in the port range, and send the converted packet to the network gateway in the fixed network; or
when the port range processing module sends the port range to the UE, modify a source address of the packet sent by the UE to a public network address acquired by the local gateway from the network gateway, and send the converted packet to the network gateway in the fixed network.

The local gateway may be a local gateway in the fixed network, and specifically, may be an LPGW or an RG.

This embodiment further provides a network gateway, and a specific structure of the network gateway is shown in FIG. 5. The network gateway includes the following modules:
a policy rule storage module 51, configured to receive a policy rule of a UE sent by a policy server, and store the policy rule, where the policy rule contains a port range of the UE; and
a policy rule execution module 52, configured to acquire a 5-tuple of a packet sent by a local gateway, match the 5-tuple of the packet with a 5-tuple in the policy rule stored in the policy rule storage module 51, determine the policy rule as a policy rule of the packet if the matching succeeds, perform policy control on the packet according to the policy rule, and send the packet on which policy control is performed to an external network.

Specifically, the policy rule execution module 52 is further configured to acquire a 5-tuple of a packet sent by an external network to the UE, match the 5-tuple of the packet with the 5-tuple in the policy rule stored in the policy rule storage module 51, determine the policy rule as a policy rule of the packet if the matching succeeds, perform policy control on the packet according to the policy rule, and send the packet on which policy control is performed to the UE.

The network gateway may be a network gateway in a fixed network, and specifically, may be a BNG.

The embodiment of the present invention further provides a system for performing policy control on a data packet, and a specific structure of the system is shown in FIG. 6. The system includes a local gateway 61 with a specific structure shown in FIG. 3A and FIG. 3B and a network gateway 62 with a specific structure shown in FIG. 4.

A specific process of the apparatus and system for performing policy control on a data packet by using the embodiments of the present invention is similar a process of the foregoing method embodiments, and the details are not described herein again.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

To sum up, in the embodiments of the present invention, a local gateway (an LPGW or an RG) allocates a unique port range to a UE, so that a network gateway (a BNG) in a fixed network can identify the UE according to the port range and perform policy control on the UE according to a policy rule containing the port range, so as to implement differentiated processing on different UEs and improve user experience.

The embodiments of the present invention may make the network gateway (BNG) in the fixed network differentiate UEs of users at different levels that access the same LPGW, differentiate a UE of a user that accesses a LPGW and a UE of a user that accesses a non-LPGW, and provide differentiated policy control, such as QoS, for different UEs. For example, a QoS requirement of a UE of a PC (Personal Computer, personal computer) user that accesses the non-LPGW is lower than a QoS requirement of a UE of a user that accesses the LPGW. For example, a QoS requirement of a UE of a gold user that accesses the LPGW is higher than that of a common user that accesses the LPGW.

The foregoing descriptions are merely exemplary embodiments of the present invention, but the protection scope of the present invention is not limited thereto. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for performing policy control on a data packet, comprising:
allocating, by a local gateway, a port range to a user equipment (UE), where the port range is unique to the UE;
sending, by the local gateway, the port range of the UE and user information to a policy server, so that the policy server makes a policy rule for the UE, wherein the policy rule contains the port range; and
performing, by the local gateway, network address translation on a packet sent by the UE , so that a source port of the converted packet is in the port range, and sending the converted packet to a network gateway in a fixed network, so that the network gateway performs policy control on the packet according to the policy rule received from the policy server.

2. The method according to claim 1, wherein the allocating, by a local gateway, a port range to a UE comprises:
allocating, by the local gateway, a private network address and a port range to the UE, based on an address request message sent by the UE by using a packet data network connection establishment or attachment process.

3. The method according to claim 2, wherein the method further comprises: associating, by the local gateway, the private network address with the port range to storage, and sending the private network address to the UE; or
sending, by the local gateway, the private network address and the port range to the UE, so that the UE selects a source port of a sent packet from the port range.

4. The method according to claim 1, wherein the sending, by the local gateway, the port range of the UE and user information to a policy server, so that the policy server makes a policy rule for the UE comprises:
sending, by the local gateway, a message carrying the port range of the UE and user information to a policy server in a mobile network, wherein the user information comprises at least one of the following items: an identifier of a user, an attribute, a level of the user, and a priority level of a user service; and
generating, by the policy server, the policy rule of the UE according to the user information, wherein the policy rule contains the port range.

5. The method according to claim 4, wherein the method further comprises:
sending, by the policy server, the policy rule to the network gateway, wherein the network gateway stores the policy rule; or
sending, by the policy server, the policy rule to a policy server in a fixed network, sending, by the policy server of the fixed network, the policy rule to the network gateway, and storing, by the network gateway, the policy rule.

6. The method according to claim 3, wherein the performing, by the local gateway, network address translation on a packet sent by the UE , so that a source port of the converted packet is in the port range, and sending the converted packet to a network gateway comprises:
when the local gateway does not send the port range to the UE, modifying, by the local gateway, a source address of the packet sent by the UE to a public network address acquired by the local gateway from the network gateway, modifying a source port number of the packet to a certain port number in the port range, and sending the converted packet to the network gateway; or
when the local gateway sends the port range to the UE, modifying, by the local gateway, a source address of the packet sent by the UE to a public network address acquired by the local gateway from the network gateway, and sending the converted packet to the network gateway.

7. The method according to claim 1, wherein the performing, by the network gateway, policy control on the packet according to the policy rule received from the policy server comprises:
acquiring, by the network gateway, a 5-tuple of the packet, matching the 5-tuple of the packet with a 5-tuple in the policy rule received from the policy server, determining the policy rule as a policy rule of the packet if the matching succeeds, performing policy control on the packet according to the policy rule, and sending the packet on which policy control is performed to an external network.

8. The method according to claim 1, wherein the method further comprises:
acquiring, by the network gateway, a 5-tuple of a packet sent by an external network to the UE, matching the 5-tuple of the packet with a 5-tuple in the policy rule received from the policy server, determining the policy rule as a policy rule of the packet if the matching succeeds, performing policy control on the packet according to the policy rule, and sending the packet on which policy control is performed to the UE.

9. The method according to any one of claims 1 to 8, wherein the policy rule comprises an uplink policy rule and a downlink policy rule, wherein in the uplink policy rule, a range of a source port is the port range allocated by the local gateway to the UE, and in the downlink policy rule, a range of a destination port is the port range allocated by the local gateway to the UE.

10. The method according to any one of claims 1 to 8, wherein the local gateway comprises a local packet data network gateway or a residential gateway in the fixed network.

11. A local gateway, comprising:
a port range processing module, configured to allocate a port range to a user equipment (UE), where the port range is unique to the UE; send the port range of the UE and user information to a policy server, so that the policy server makes a policy rule for the UE, wherein the policy rule contains the port range; and
a network address translation module, configured to perform network address translation on a packet sent by the UE, so that a source port of the converted packet is in the port range, and send the converted packet to a network gateway in a fixed network, so that the network gateway performs policy control on the packet according to the policy rule received from the policy server.

12. The local gateway according to claim 11, wherein the port range processing module comprises:
a port range allocation module, configured to allocate a private network address and the port range to the UE, based on an address request message sent by the UE by using a packet data network connection establishment or attachment process; and
associate the private network address of the UE with the port range of the UE and store them, and send the private network address to the UE; or send the private network address of the UE and the port range of the UE to the UE, so that the UE selects a source port of a sent packet from the port range; and
an information transmission module, configured to send a message carrying the port range of the UE and user information to a policy server in a mobile network, so that the policy server generates a policy rule of the UE according to the user information, wherein the user information comprises at least one of the following items: an identifier of a user, an attribute, a level of the user, and a priority level of a user service, and the policy rule contains the port range.

13. The local gateway according to claim 11 or 12, wherein
the network address translation module is specifically configured to: when the port range processing module does not send the port range to the UE, modify a source address of a packet sent by the UE into a public network address acquired by the local gateway from the network gateway, modify a source port number of the packet to a certain port number in the port range, and send the converted packet to the network gateway; or
when the port range processing module sends the port range to the UE, modify a source address of the packet sent by the UE to a public network address acquired by the local gateway from the network gateway, and send the converted packet to the network gateway.

14. The local gateway according to claim 11, wherein the local gateway comprises a residential gateway or a local packet data network gateway.

15. A network gateway, comprising:
a policy rule storage module, configured to receive a policy rule of a user equipment (UE) sent by a policy server and store the policy rule, wherein the policy rule contains a port range of the UE; and
a policy rule execution module, configured to acquire a 5-tuple of a packet sent by a local gateway, and match the 5-tuple of the packet with a 5-tuple in the policy rule stored in the policy rule storage module, determine the policy rule as a policy rule of the packet if the matching succeeds, perform policy control on the packet according to the policy rule, and send the packet on which policy control is performed to an external network.

16. The network gateway according to claim 15, wherein
the policy rule execution module is further configured to acquire a 5-tuple of a packet sent by the external network to the UE, and match the 5-tuple of the packet with the 5-tuple in the policy rule stored in the policy rule storage module, determine the policy rule as a policy rule of the packet if the matching succeeds, perform policy control on the packet according to the policy rule, and send the packet on which policy control is performed to the UE.

17. A system for performing policy control on a data packet, comprising the local gateway according to any one of claims 11 to 14 and the network gateway according to claim 15 or 16.
